# EUROPEAN PATENT APPLICATION

(11) **EP 4 635 644 A1**
(43) Date of publication of application: **22.10.2025**
(21) Application number: 25167979.1
(22) Date of filing: 02.04.2025
(51) Int. Cl.: B21D 5/01

(54) **PRESS MOLD APPARATUS FOR MANUFACTURING**

(30) Priority: 15.04.2024 KR 20240050259
(71) Applicant: SAMSUNG SDI CO., LTD., Yongin-si, Gyeonggi-do 17084 (KR)
(72) Inventor: Seok, Dohyeong, 17084 Yongin-si (KR)
(74) Representative: Marks & Clerk LLP

(57) **Abstract**

A press mold apparatus for manufacturing an electrode assembly in which a round portion is formed in an uncoated region, the press mold apparatus for manufacturing the electrode assembly comprising:
a base mold (10) including:
a seating surface (12) configured to seat the electrode assembly and
a first pressing portion (20) configured to press a first surface of the round portion of the electrode assembly;
a movable mold (30) configured to be lifted up and down above the base mold and including:
a pressing surface (32) configured to press the electrode assembly,
and
a second pressing portion (50) configured to press a second surface opposing the first surface of the round portion of the electrode assembly; and
a driver (40) configured to drive the movable mold (30).

## Description

### FIELD

The present disclosure relates to a press mold apparatus for manufacturing an electrode assembly including a jelly roll type electrode assembly.

### BACKGROUND

In general, a rechargeable battery is classified according to a structure of an electrode assembly including a positive electrode, separator, and negative electrode structure.

Representative examples of an electrode assembly include a jelly roll-type electrode assembly with a structure in which a long sheet-shaped positive electrode and a negative electrode are wound with a separator in between, a stack-type electrode assembly with a structure in which a plurality of positive and negative electrodes cut into units of a certain size are sequentially stacked with a separator disposed therebetween, and a stack/folding-type electrode assembly with a structure in which bi-cells or full cells are wound by stacking a certain unit of positive and negative electrodes with a separator disposed therebetween.

### SUMMARY

According to an embodiment of the present disclosure, a press mold apparatus for manufacturing an electrode assembly is provided, which enables stable press molding of a round portion of an uncoated region of a jelly roll-type electrode assembly, thus improving the manufacturing quality of the electrode assembly.

An embodiment of the present disclosure includes an apparatus for molding an electrode assembly (or a press mold apparatus for manufacturing an electrode assembly) in which a round portion is formed in an uncoated region, and the apparatus for manufacturing the electrode assembly (or press mold apparatus for manufacturing an electrode assembly) includes: a base mold including a seating surface on which the electrode assembly is seated (or configured to seat the electrode assembly) and a first pressing portion pressing a first surface (or configured to press a first surface) of the round portion of the electrode assembly; a movable mold configured (or installed to be able) to be lifted up and down above the base mold and including a pressing surface that presses the electrode assembly (or is configured to press the electrode assembly) and including a second pressing portion pressing a second surface (or configured to press a second surface) opposing the first surface of the round portion of the electrode assembly; and a driver configured to drive (or driving) the movable mold.

A first insertion groove may be formed on the seating surface into which the first pressing portion is inserted.

The first pressing portion may include: a first pressing block inserted into the first insertion groove and protruding from (or protruded onto) the seating surface; and a first tape member attached to a protruded surface of the first pressing block.

The first pressing block may be formed in the shape of a bar formed with a long length in a first direction of the base mold (or extending in a first direction of the base mold).

A first round surface may be formed on the protruded surface of the first pressing block.

The first round surface may have a concave shape that presses the first surface (or is configured to press the first surface) of the round portion of the electrode assembly.

The first tape member may be a heat resistant Teflon (Teflon^{™}) material that is attached to the first round surface and presses the round portion (or is configured to press the round portion) formed on the first surface of the electrode assembly.

A thickness of the first tape member may be a value in a range of (about) 50 micrometer (µm) to (about) 100 µm.

The first pressing block may be fixed with adhesive to an inside area (or the inside) of the first insertion groove.

The first pressing block may be detachably fixed inside the first insertion groove by a bolt member.

A second insertion groove into which the second pressing portion is inserted may be formed on the pressing surface.

The second pressing portion may include: a second pressing block that is inserted and fixed into the second insertion groove and protrudes from (or protruded on) the pressing surface; and a second tape member that is attached to a protruded surface of the second pressing block.

The second pressing block may be formed in the shape of a bar formed with a long length in a first direction of the movable mold (or extending in a first direction of the movable mold).

A second round surface may be formed on the protruded surface of the second pressing block.

The second round surface may have a concave shape that presses the second surface (or is configured to press the second surface) of the round portion of the electrode assembly.

The second tape member may be a heat resistant Teflon^{™} material that is attached to the second round surface and presses a round portion (or is configured to press a round portion) formed on the second surface of the electrode assembly.

A thickness of the second tape member may be a value in a range of (about) 50 µm to (about) 100 µm.

The second pressing block may be fixed with adhesive to an inside area (or the inside) of the second insertion groove.

The second pressing block may be detachably fixed inside the second insertion groove by a bolt member.

The base mold may be installed on a base frame, and the movable mold may be installed on a movable frame.

The driver may include a cylindrical (or cylinder) member installed between the base frame and the movable frame (or movable mold).

According to the embodiments, by the lowering operation of the movable mold while the electrode assembly is seated on the base mold, each portion of the opposing first and second surfaces of the round portion of the electrode assembly is appropriately pressed by the pressing block, and thus it is possible to improve the manufacturing quality of the electrode assembly.

According to some aspects of the present disclosure, a method of manufacturing the electrode assembly using the press mold apparatus is provided.

At least some of the above and other features of the invention are set out in the claims.

### BRIEF DESCRIPTION OF THE DRAWINGS

FIG. 1 is a side view schematically illustrating a press mold apparatus for manufacturing an electrode assembly, according to a first embodiment of the present disclosure.
FIG. 2 is a side view schematically illustrating a state in which a movable mold in FIG. 1 is lowered and the electrode assembly is pressed.
FIG. 3 is a schematic diagram of part A (shown in FIG. 2) in which an electrode assembly of FIG. 2 is pressed by first/second pressing portions by the lowering of the movable mold.
FIG. 4 is a perspective view of the first pressing portion according to the first embodiment of the present disclosure.
FIG. 5 is a perspective view schematically showing the second pressing portion according to the first embodiment of the present disclosure.
FIG. 6 is a side view that schematically shows a state in which a movable mold is lowered and presses an electrode assembly, according to a second embodiment of the present disclosure.
FIG. 7 is a schematic diagram of part B (shown in FIG. 6) in which the electrode assembly is pressed by first/second pressing portions by the lowering of the movable mold.

### DETAILED DESCRIPTION

Hereinafter, the present disclosure will be described more fully with reference to the accompanying drawings, in which embodiments of the present techniques are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

Among the types of electrode assemblies described herein, a jelly roll-type electrode assembly may be manufactured by pressure molding while being disposed between a base mold and a movable mold installed to be able to lift and lower on an upper portion of the base mold.

However, in an area close to an uncoated region of the jelly roll-type electrode assembly, there is a round portion where a mixture thickness is reduced such that stable press manufacturing is difficult due to the operation of the mold.

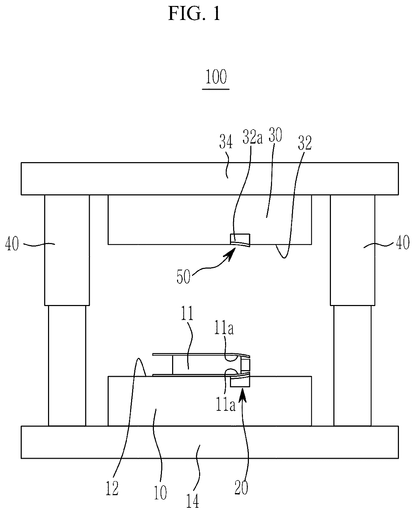

During a stack electrode plate process of stripe coating for manufacture of a jelly roll-shaped electrode assembly 11 (such as shown in FIG. 1), a mixture thickness of a region close to an uncoated region (i.e., not coated with an active material, etc.) decreases. Accordingly, with the electrode assembly 11 disposed between a base mold 10 and a movable mold 30 in the present embodiments (such as shown in FIG. 1), a round portion 11a may be further locally pressed. This will be described in detail below with reference to the drawings.

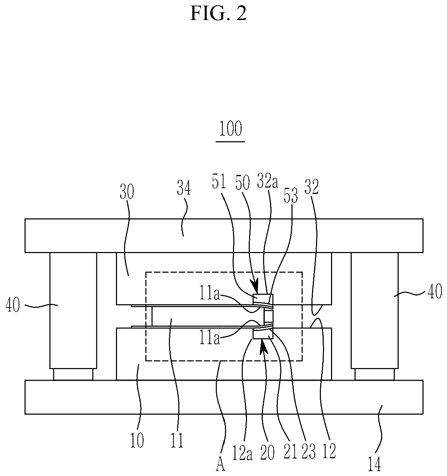

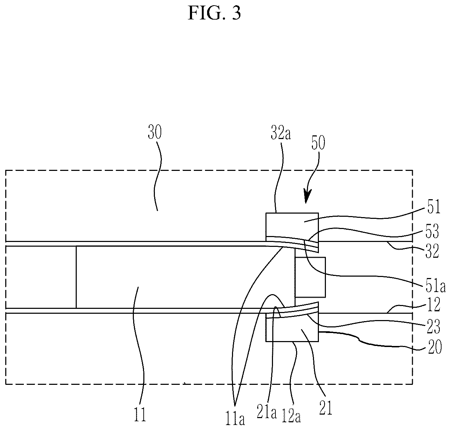

FIG. 1 is a side view schematically illustrating a press mold apparatus for manufacturing an electrode assembly according to a first embodiment of the present disclosure. FIG. 2 is a side view schematically illustrating a state in which a movable mold shown in FIG. 1 is lowered and the electrode assembly is pressed. FIG. 3 is a schematic diagram of a part A (shown in FIG. 2) in which an electrode assembly of FIG. 2 is pressed by first/second pressing portions by the lowering of the movable mold.

As shown in FIG. 1 to FIG. 3, a press mold apparatus 100 for manufacturing an electrode assembly according to an embodiment is a molding device for an electrode assembly 11 in which a round portion 11a is formed in an uncoated region. As shown, the press mold apparatus 100 includes a base mold 10 in which a seating surface 12 on which the electrode assembly 11 is seated is formed and in which a first pressing portion 20 pressing a first surface of the round portion 11a of the electrode assembly 11 is installed. The press mold apparatus includes a movable mold 30 installed to be able to move up and down above the base mold 10 and in which a pressing surface 32 pressing the electrode assembly 11 is formed and in which a second pressing portion 50 pressing a second surface that faces the first surface of the round portion 11a is installed. The press mold apparatus 100 may include a driver 40 driving the movable mold 30.

The base mold 10 may be installed on the floor of a work space, and may be installed as a weighted body of a metallic material to stably support the load according to the operation of the movable mold 30, which will be described later. The base mold 10 may be installed while being supported on the floor by the base frame 14. The base mold may be installed on the base frame.

A flat seating surface 12 on which the electrode assembly 11 is seated may be formed on or in the base mold 10. The first pressing portion 20 for pressure molding of the round part 11a formed in the uncoated region of the electrode assembly 11 may be installed on the seating surface 12.

Referring to FIG. 2, a first insertion groove 12a for installation of the first pressing portion 20 may be formed on the seating surface 12.

The first insertion groove 12a is formed with a long length at one edge position of the seating surface 12, and may be formed such that a portion of the first pressing portion 20 is inserted and fixed.

The first pressing portion 20 may be installed with a portion inserted into the first insertion groove 12a and the remaining portion protruding to the outside of the first insertion groove 12a. The first pressing portion 20 may be inserted into the first insertion groove 12a and may be fixed by an adhesive.

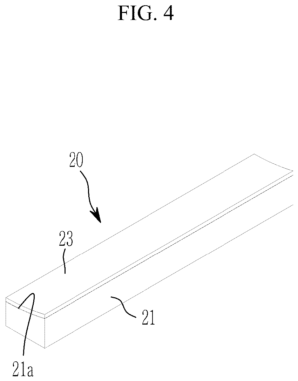

FIG. 4 is a perspective view of the first pressing portion 20 according to the first embodiment of the present disclosure.

Referring to FIG. 4, in more detail, the first pressing portion 20 may include a first pressing block 21 fixed to the first insertion groove 12a by being inserted thereto and protruding toward the seating surface 12 and may include a first tape member 23 attached to a protruded surface of the first pressing block 21.

A portion of the first pressing block 21 may be inserted and fixed into the first insertion groove 12a (fixed to an inside area of the first insertion groove) with an adhesive, and the remaining portion may protrude to the outside of the seating surface 12, thereby protruding from the seating surface. The first pressing block 21 may be formed into a bar shape formed with a long length in a first direction of the base mold 10.

That is, in some examples, the first pressing block 21 may be formed in an approximately cuboid bar shape, excluding the portion protruding outside of the seating surface 12. The first pressing block 21 is not necessarily limited to a straight hexahedral shape, and it is also possible to change and/or modify a part inserted into the first insertion groove 12a to include a round shape.

A first round surface 21a for pressing the round portion 11a formed on the first surface of the electrode assembly 11 may be formed on the protruded surface of the first pressing block 21 (e.g., as a rounded surface).

The first round surface 21a is a part that may be formed on the protruded surface of the first pressing block 21 and may press the first surface of the round portion 11a of the electrode assembly 11 during the operation of the mold, and it may be formed with a curvature corresponding to the shape of the round portion 11a formed on the first surface of the electrode assembly 11.

The first round surface 21a is formed as a concave surface (having a concave shape) in the present embodiment, and may press the round portion 11a formed in the electrode assembly 11 during the operation of the mold.

The first tape member 23 may be attached to the first round surface 21a. The first tape member may press the round portion formed on the first surface of the electrode assembly.

In more detail, the first tape member 23 may be attached to the first round surface 21a for stable pressing while preventing contact damage in the process of contact between the first pressing block 21 and the round portion 11a of the electrode assembly 11. For this purpose, the first tape member 23 may be formed of a heat resistant Teflon^{™} material.

A thickness of the first tape member 23 that is attached may be changed in a range of 50 µm to 100 µm depending on the number of layers of the electrode assembly. The thickness may be a value in the range of 50 µm to 100 µm.

The first tape member 23 is shown as being attached to the first round surface 21a as a single layer, but it is not necessarily limited thereto, and may also be attached as multiple layers for a stable pressurizing effect.

Meanwhile, in some examples, the movable mold 30 is installed to be able to be lifted up and down above the base mold 10, and it may be installed to be able to be lifted up and down by the driving force of the driver 40 while being coupled to and/or installed on a movable frame 34.

The driver 40 may be installed between the base frame 14 and the movable frame 34, and may be applied as a cylindrical member operated hydraulically or pneumatically. Therefore, the movable mold 30 may be operated to descend or rise backward in the direction of the base mold 10 according to the operation of the driver 40.

A pressing surface 32 that presses the electrode assembly 11 may be formed on or in the movable mold 30.

A second pressing portion 50 for press forming the round portion 11a formed in the uncoated region of the electrode assembly 11 may be installed on or formed in the pressing surface 32.

A second insertion groove 32a may be formed on the pressing surface 32 for installation of the second pressing portion 50.

The second insertion groove 32a may be formed to have a long length at an edge position on one side of the pressing surface 32 and may be formed such that at least a portion of the second pressing portion 50 can be inserted and fixed.

In some embodiments, the second insertion groove 32a may be formed on the pressing surface 32 of the movable mold 30 at a position on a vertical line at the position where the first insertion groove 12a is formed.

The second pressing portion 50 may be installed with a portion inserted into the second insertion groove 32a and with the remaining portion protruding to the outside of the second insertion groove 32a. The second pressing portion 50 may be inserted into the second insertion groove 32a and may be fixed by an adhesive.

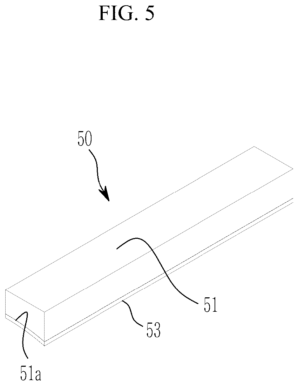

FIG. 5 is a perspective view schematically showing the second pressing portion 50 according to the first embodiment of the present disclosure.

Referring to FIG. 5, more specifically, the second pressing portion 50 may include a second pressing block 51 that is inserted and fixed into the second insertion groove 32a and protruding from the pressing surface 32, and a second tape member 53 attached to a protruded surface of the second pressing block 51.

A portion of the second pressing block 51 may be inserted and fixed into the second insertion groove 32a (fixed to an inside area of the second insertion groove) by an adhesive, and the remaining portion may protrude to the outside of the seating surface 12. The second pressing block 51 may be formed into a bar shape that is long in a first direction of the movable mold 30.

That is, in some examples, the second pressing block 51 may be formed in an approximately cuboid bar shape, excluding a portion protruding outside the pressing surface 32. The second pressing block 51 is not necessarily limited to a straight hexahedral shape, and a part inserted into the second insertion groove 32a may include a round shape.

A second round surface 51a may be formed on the protruded surface of the second pressing block 51 for pressing the round portion 11a formed on the second surface opposite to the first surface of the electrode assembly 11.

The second round surface 51a is a part that may be formed on the protruded surface of the second pressing block 51 and may press the second surface of the round portion 11a of the electrode assembly 11 during the operation of the mold, and it may be formed with a curvature corresponding to the shape of the round portion 11a formed on the second surface of the electrode assembly 11.

The second round surface 51a is formed as a concave surface (having a concave shape) in the present embodiment, and may press the round portion 11a formed in the jelly roll type electrode assembly 11 during the operation of the mold.

The second tape member 53 may be attached to the second round surface 51a. The second tape member may press the round portion formed on the second surface of the electrode assembly.

The second tape member 53 may be attached to the second round surface 51a for stable pressing while preventing contact damage in the process of and/or from contact between the second pressing block 51 and the round portion 11a formed on the second surface of the electrode assembly 11. For this purpose, the second tape member 53 may be formed of a heat resistant Teflon^{™} material.

A thickness of the second tape member 53 may be changed in the range of 50 µm to 100 µm depending on the number of layers of the electrode assembly. The thickness may be a value in the range of 50 µm to 100 µm.

It is shown, as an example, that the second tape member 53 is attached to the second round surface 51a as a single layer, but it is not necessarily limited thereto, and may also be attached as multiple layers for a stable pressurizing effect.

As described above, in the jelly roll type electrode assembly 11, each portion of the opposing first and second surfaces of the round portion 11a may be pressed by the first/second pressing blocks 21 and 51, respectively, by a lowering operation of the movable mold 30 while being seated on the base mold 10.

Accordingly, in the electrode assembly 11, the round portion of the uncoated region where the terminal portion may be formed is appropriately pressed by the first/second pressing blocks 21 and 51, respectively, thereby enabling improvement of the manufacturing quality of the electrode assembly.

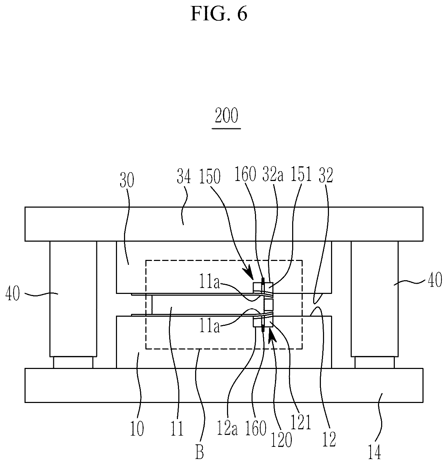

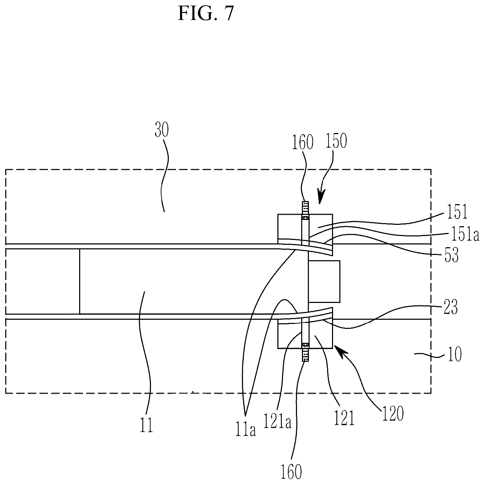

FIG. 6 is a side view that schematically shows a state in which a movable mold is lowered and presses an electrode assembly according to a second embodiment of the present disclosure. FIG. 7 is a schematic diagram that schematically shows the part B (shown in FIG. 6) in a state that the electrode assembly is pressed by first/second pressing portions by the lowering of the movable mold. The same reference numbers in FIG. 1 to FIG. 5, that are also shown in FIG. 6 and FIG. 7, refer to the same or similar members of the same or similar functions. Thus, a detailed description of the same reference number will be omitted.

As shown in FIG. 6 and FIG. 7, a first pressing portion 120 of a press molding apparatus 200 for manufacturing an electrode assembly according to a second embodiment of the present disclosure includes a first pressing block 121 and a first tape member 23. In addition, the second pressing portion 150 includes a second pressing block 151 and a second tape member 53.

The first pressing block 121 and the second pressing block 151 are each detachably fixed to a first insertion groove 12a and a second insertion groove 32a, respectively, by a fastening member such as a bolt member 160 and/or the like. For this, fastening holes 121a and 151a for fixing the bolt member 160 may be formed in the first pressing block 121 and the second pressing block 151, respectively.

Therefore, when it is necessary to change lengths of the first pressing block 121 and the second pressing block 151 protruding outside of the seating surface 12 and the pressing surface 32, respectively, the first pressing block 121 and the second pressing block 151 may be fixed to the first insertion groove 12a and the second insertion groove 32a by adjusting the sizes of the insertion groove 12a and the second insertion groove 32a.

Accordingly, in response to a change in the size of the electrode assembly 11, the first pressing block 121 and the second pressing block 151 can be replaced with appropriate sizes, thereby improving the manufacturing quality of the electrode assembly.

Although the embodiments of the present disclosure have been described in detail above, the scope of the present disclosure is not limited thereto, and various modifications and improvements of those skilled in the art using the basic concepts of the present disclosure defined in the following claims also belong to the scope of the present disclosure.

## Claims

1. A press mold apparatus for manufacturing an electrode assembly in which a round portion is formed in an uncoated region, the press mold apparatus for manufacturing the electrode assembly comprising:
a base mold including:
a seating surface configured to seat the electrode assembly and
a first pressing portion configured to press a first surface of the round portion of the electrode assembly;
a movable mold configured to be lifted up and down above the base mold and including:
a pressing surface configured to press the electrode assembly, and
a second pressing portion configured to press a second surface opposing the first surface of the round portion of the electrode assembly; and
a driver configured to drive the movable mold.

2. The press mold apparatus for manufacturing the electrode assembly of claim 1, wherein:
a first insertion groove is formed on the seating surface into which the first pressing portion is inserted.

3. The press mold apparatus for manufacturing the electrode assembly of claim 2, wherein the first pressing portion comprises:
a first pressing block inserted into the first insertion groove and protruding from the seating surface; and
a first tape member attached to a protruded surface of the first pressing block.

4. The press mold apparatus for manufacturing the electrode assembly of claim 3, wherein:
the first pressing block is formed in the shape of a bar extending in a first direction of the base mold.

5. The press mold apparatus for manufacturing the electrode assembly of claim claim 3 or claim 4, wherein:
a first round surface is formed on the protruded surface of the first pressing block.

6. The press mold apparatus for manufacturing the electrode assembly of claim 5, wherein:
(A) the first round surface has a concave shape configured to press the first surface of the round portion of the electrode assembly;
and/or
(B) the first tape member is a heat resistant Teflon^{™} material that is attached to the first round surface and configured to press the round portion formed on the first surface of the electrode assembly.

7. The press mold apparatus for manufacturing the electrode assembly of any of claims 3 to 6, wherein:
a thickness of the first tape member is a value in a range of 50 µm to 100 µm.

8. The press mold apparatus for manufacturing the electrode assembly of any of claims 2 to 7, wherein:
(A) the first pressing block is fixed with adhesive to an inside area of the first insertion groove; or
(B) the first pressing block is detachably fixed inside the first insertion groove by a bolt member.

9. The press mold apparatus for manufacturing the electrode assembly of any preceding claim, wherein:
a second insertion groove into which the second pressing portion is inserted is formed on the pressing surface.

10. The press mold apparatus for manufacturing the electrode assembly of claim 9, wherein the second pressing portion comprises:
a second pressing block that is inserted and fixed into the second insertion groove and that protrudes from the pressing surface; and
a second tape member that is attached to a protruded surface of the second pressing block.

11. The press mold apparatus for manufacturing the electrode assembly of claim 10, wherein:
the second pressing block is formed in the shape of a bar extending in a first direction of the movable mold.

12. The press mold apparatus for manufacturing the electrode assembly of claim 10 or claim 11, wherein:
a second round surface is formed on the protruded surface of the second pressing block.

13. The press mold apparatus for manufacturing the electrode assembly of claim 12, wherein:
(A) the second round surface has a concave shape configured to press the second surface of the round portion of the electrode assembly;
and/or
(B) the second tape member is a heat resistant Teflon^{™} material that is attached to the second round surface and configured to press the round portion formed on the second surface of the electrode assembly.

14. The press mold apparatus for manufacturing the electrode assembly of any of claims 10 to 13, wherein:
(A) a thickness of the second tape member is a value in a range of 50 µm to 100 µm;
and/or
(B1) the second pressing block is fixed with adhesive to an inside area of the second insertion groove; or
(B2) the second pressing block is detachably fixed inside the second insertion groove by a bolt member.

15. The press mold apparatus for manufacturing the electrode assembly of any preceding claim, wherein:
the base mold is installed on a base frame,
the movable mold is installed on a movable frame, and
the driver comprises a cylindrical member installed between the base frame and the movable frame.
